Europäisches Patentamt

European Patent Office

Office européen des brevets

(19)

(11) **EP 1 158 436 A1**

(12) **EUROPEAN PATENT APPLICATION**

(43) Date of publication:
**28.11.2001 Bulletin 2001/48**

(51) Int Cl.⁷: **G06F 17/60**

(21) Application number: **01302913.7**

(22) Date of filing: **28.03.2001**

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **26.05.2000 GB 0013010**

(71) Applicant: **NCR INTERNATIONAL INC.
Dayton, Ohio 45479 (US)**

(72) Inventors:
 • **Hoggart, Clive
   London SW12 8LL (GB)**
 • **Griffin, James
   Northfields, London W13 9TT (GB)**

(74) Representative: **Cleary, Fidelma et al
International IP Department
NCR Limited
206 Marylebone Road
London NW1 6LY (GB)**

(54) **Method and apparatus for predicting whether a specified event will occur after a specified trigger event has occurred**

(57) In many situations it is required to predict if and/or when an event will occur after a trigger. For example, businesses such as banks would like to predict if and when their customers are likely to leave after a particular event such as closing a loan. The business is then able to take action to prevent loss of customers. Customer data including data about customer who have closed a loan and then left a bank for example, is used to create a Bayesian statistical model. A plurality of attributes are available for each customer and the model involves partitioning these attributes into a plurality of partitions. In one embodiment the Bayesian statistical model is a survival analysis type model and in another embodiment the model comprises fitting a Weibull distribution to the data in each of the partitions. The marginal likelihood of the data is calculated and then the method involves mixing over all possible partitions in a Bayesian framework. Alternatively an optimal set of partitions which best predicts the data is chosen.

EP 1 158 436 A1

**Description**

This invention relates to a method and apparatus for predicting whether a specified event will occur for an entity after a specified trigger event has occurred for that entity. The invention is particularly related to, but in no way limited to, predicting customer behaviour using a Bayesian statistical technique.

In many situations it is required to predict if and/or when an event will occur after a trigger. For example, businesses would like to predict if and when their customers are likely to leave after a particular event. The business is then able to take action to prevent loss of customers. Another case involves predicting if and when a bank customer is likely to take out a mortgage after a trigger such as a salary increase or change in marital status. The bank would then be able to actively market its mortgages to specifically targeted groups of customers who are likely to be considering many different mortgage providers. Many other examples exist outside the banking and business fields. For example, predicting the time to death of patients after the trigger of a particular disease, which is known as "survival analysis" in the field of statistics.

Bayesian statistical techniques have been used to "learn" or make predictions on the basis of a historical data set. Bayes' theorem is a fundamental tool for a learning process that allows one to answer questions such as "How likely is my hypothesis in view of these data?" For example, such a question could be "How likely is a particular future event to occur in view of these data?"

Bayes theorem is written as :

$$P(H \,/\, data) = \frac{P(data/H)P(H)}{P(data)}$$

Which can also be written as:

$$P(H \,/\, data) \propto P(data \,/\, H) \bullet P(H)$$

Because P(data) is unconditional and thus does not depend on H.

The probability of H given the data, P(H/data) is called the posterior probability of H. The unconditional probability of H, P(H) is called the prior probability of H and the probability of the data given H, P(data/H) is called the likelihood of H. By using knowledge and experience about past data an assessment of the prior probability can be made. New data is then collected and used to update the prior probability following Bayes theorem to produce a posterior probability. This posterior probability is then a prediction in the sense that it is a statement about the likelihood of a particular event occurring in the future. However, it is not simple to design and implement such Bayesian statistical methods in ways that are suited to particular practical applications.

It is accordingly an object of the present invention to provide a method and apparatus for predicting whether a specified event will occur for an entity after a specified trigger event has occurred for that entity, which overcomes or at least mitigates one or more of the problems noted above.

According to an aspect of the present invention there is provided a method of predicting whether a specified event will occur for an entity after a specified trigger event has occurred for that entity, comprising the steps of:-

- accessing data about other entities for which the specified event has occurred in the past after the specified trigger event;
- accessing data about the entity for which the prediction is required;
- creating a Bayesian statistical model on the basis of at least the accessed data; and
- using the model to generate the prediction; wherein the data comprises a plurality of attributes associated with each entity and wherein creating the model comprises partitioning the attributes into a plurality of partitions.

A corresponding computer system is also provided for predicting whether a specified event will occur for an entity after a specified trigger event has occurred for that entity, comprising:-

- an input arranged to access data about other entities for which the specified event has occurred in the past after the specified trigger event; and wherein said input is further arranged to access data about the entity for which the prediction is required; wherein the data comprises a plurality of attributes associated with each entity;
- a processor arranged to create a Bayesian statistical model on the basis of at least the accessed data by partitioning the attributes into a plurality of partitions; and wherein the processor is further arranged to use the model to generate the prediction.

A corresponding computer program is provided, arranged to control a computer system in order to predict whether a specified event will occur for an entity after a specified trigger event has occurred for that entity, said computer program being arranged to control said computer system such that:-

- data is accessed about other entities for which the specified event has occurred in the past after the specified trigger event;
- data is accessed about the entity for which the prediction is required, wherein the data comprises a plurality of attributes associated with each entity;
- a Bayesian statistical model is created on the basis of at least the accessed data by partitioning the attributes into a plurality of partitions; and
- the model is used to generate the prediction.

This provides the advantage that it is possible to predict whether an event will occur after a trigger event. For example, the entities may be bank customers and using the method it is possible to predict whether a customer will leave a bank after having closed a loan with that bank. Data comprising customer attributes, such as the age, sex, salary, number of credit cards, number of loans, or current bank balance of the customers is used. A Bayesian statistical model is created and in doing this the attributes (which can be considered as existing in a space of attributes) are divided into a plurality of partitions. That is the space of attributes is divided into partitions. By partitioning the attributes in this way the method is found to be particularly effective. Predictions are found to correspond well to empirical data in tests of the method as described further below and to give improved results as compared with prior art models which use global modelling techniques. By partitioning the attributes, the failings of global modelling techniques such as the method of Chen, Ibrahim and Sinha (see the section headed "references" below for bibliographic details of this publication) are avoided.

Preferably the Bayesian statistical model comprises a survival analysis type model which is arranged to take into account the assumption that the specified event will not occur for some of the entities. For example, in the case that the time to death of patients with a particular disease is being investigated, it is assumed that a proportion of these patients will not die and will be cured. Survival analysis models have previously used generalised linear models to account for customer/patient attributes. These global models typically lack sufficient flexibility to account for the variation across customers attributes in survival times. The present invention provides the advantage that a survival analysis model is adapted to fit a local model for customer attributes. An embodiment of the present invention maintains the proportional hazards property which although restrictive can be advantageous. The proportional hazards property implies that the ratio of the hazards for two customers is constant over time provided that their attributes do not change.

In another preferred embodiment the step of creating the model comprises fitting a Weibull distribution to the data within each partition. This provides the advantage that by fitting the Weibull distribution locally (i.e. within each partition) considerable modelling flexibility is gained. At the same time, the drawbacks of previous global survival models are overcome by using local modelling. This embodiment moves away from the restriction of proportional hazards.

Further benefits and advantages of the invention will become apparent from a consideration of the following detailed description given with reference to the accompanying drawings, which specify and show preferred embodiments of the invention.

Figure 1 is a flow diagram of a method for predicting whether a specified event will occur for an entity after a specified trigger event has occurred for that entity.

Figure 2 is a schematic diagram of a computer system for predicting whether a specified event will occur for an entity after a specified trigger event has occurred for that entity.

Figure 3 is a flow diagram of a method for predicting whether a specified event will occur for an entity after a specified trigger event has occurred for that entity.

Figure 4 is a flow diagram of another embodiment of a method for predicting whether a specified event will occur for an entity after a specified trigger event has occurred for that entity.

Figure 5 is a flow diagram of a method of sampling for a tessellation structure.

Figure 6 is a table containing example input data for the computer system of Figure 2 and example output data obtained from that computer system as well as corresponding empirical data.

Figure 7 is graph of the output data of Figure 6.

Embodiments of the present invention are described below by way of example only. These examples represent the best ways of putting the invention into practice that are currently known to the Applicant although they are not the only ways in which this could be achieved.

Consider a business such as a bank. This bank may have beliefs, experience and past data about customer transactions. Using this information the bank can form an assessment of the prior probability that a particular customer will exhibit a certain behaviour, such as leave the bank. The bank may then collect new data about that customer's behaviour and using Bayes' theorem can update the prior probability using the new observed data to give a posterior probability that the customer will exhibit the particular behaviour such as leaving the bank. This posterior probability is a prediction in the sense that it is a statement of the likelihood of an event occurring. In this way the present invention uses Bayesian statistical techniques to make predictions about customer behaviour. However, as mentioned above, it is not simple to design and implement such methods in ways that are suited to particular applications. The present invention involves such a method and is described in more detail below.

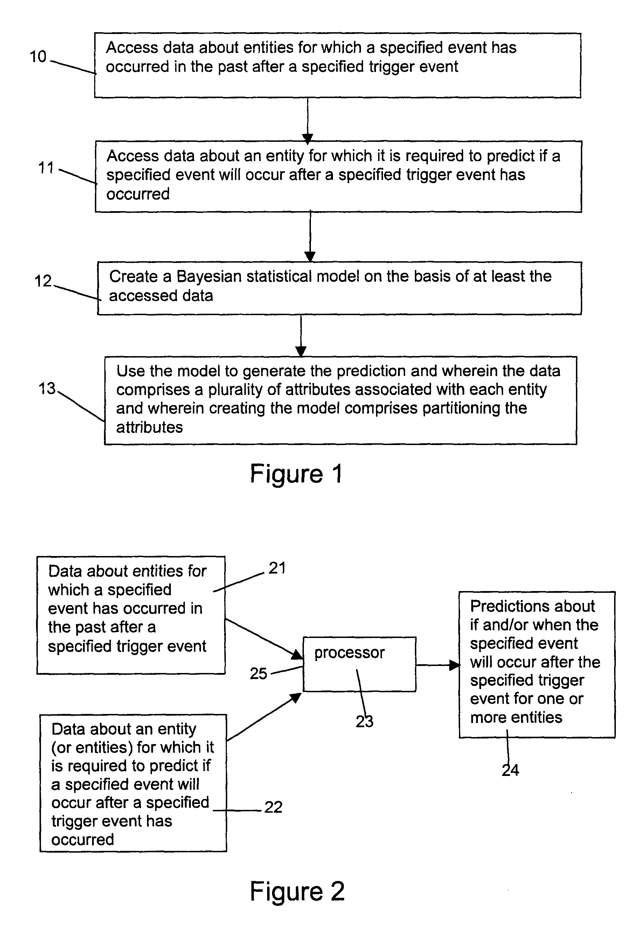

Figure 1 is a flow diagram of a method for predicting whether a specified event will occur for an entity after a specified trigger event has occurred for that entity. Data is accessed about entities for which a specified event has occurred in the past after a specified trigger event (see box 10 of Figure 1). The entities may be customers, individuals, or any other suitable item such as a computer system. For example, the data comprises customer attributes such as age, sex and salary for customers who have closed a loan and then left the bank. More data is then accessed (see box 11 of Figure 1) about an entity for which it is required to make a prediction. For example, this data may comprise customer attributes associated with customers for whom it is required to predict whether they will leave a bank after closing a loan.

A Bayesian statistical model is then created (see box 12 of Figure 1) on the basis of at least the accessed data and this model is used to generate the predictions. The process of generating the model comprises partitioning the attributes in to a plurality of partitions.

Two embodiments of the method of Figure 1 are now described. The first embodiment takes a Bayesian survival model and adapts it such that attribute data are partitioned. The second embodiment involves fitting a Weibull distribution to the customer attribute data within each partition. Both embodiments are described below with respect to a particular application, that of predicting if and/or when a customer will leave a bank after having paid off a loan. However, this embodiment is also suitable for other applications in which it is required to predict whether a specified event will occur for an entity after a specified trigger event has occurred for that entity.

The methods of both these embodiments may be implemented using any suitable programming language executed on any suitable computing platform. For example, Matlab (trade mark) may be used together with a personal computer. A user interface is provided such as a graphical user interface to allow an operator to control the computer program, for example, to adjust the model, to display the results and to manage input of customer data. Any suitable form of user interface may be used as is known in the art.

Figure 2 is a schematic diagram of a computer system for predicting whether a specified event will occur for an entity after a specified trigger event has occurred for that entity. The computer system comprises a processor 23 which may be any suitable type of computing platform such as a personal computer or a workstation. The computer system has an input 25 which is arranged to receive data 21 about entities for which a specified event has occurred in the past after a specified trigger event. This input 25 is also arranged to receive data about an entity (or entities) for which it is required to predict if a specified event will occur after a specified trigger event has occurred. Using this data, which comprises a plurality of attributes associated with each entity, the processor generates a Bayesian statistical model and partitions the attributes into a plurality of partitions. Once the model is formed it is used by the processor 23 to generate predictions 24 about if and/or when the specified event will occur after the specified trigger event for one or more entities.

The first embodiment is now described:

A common problem faced by banks is customer attrition. In order to deal with this problem banks required the answer to the question "will customer A leave the bank?" We are interested in the case where customer attrition occurs after a particular event. For example, customers may leave a bank after having paid off a loan. If we can predict who will leave and the time between closing the account and leaving the bank, then action can be taken to prevent the customer leaving.

This problem is similar to the statistical subject of survival analysis. In a typical medical survival analysis problem the time to death of a patient with a particular disease is investigated. Typical models assume that all patients will eventually die from the disease. However, in the present invention it is assumed that a proportion of the customers will not leave the bank due to the particular event. In medicine this is equivalent to a proportion of the patients being cured and models which have accounted for this allow for a so called "cure rate".

A Bayesian survival model has been developed (Chen, Ibrahim and Sinha, Journal of the American Statistical Association, 1999) which allows for a cure rate. The model described in the paper allows the cure rate to vary for individuals with different attributes by using a generalised linear model. A generalised linear model is a global model. In a global model an assumption is made about how the data is distributed as a whole and so global modelling is a search for global trends. However, all customers may not follow a global trend; some subpopulations of customers may differ radically from others. The present invention extends the work of Chen, Ibrahim and Sinha (1999) to model the customer attributes locally avoiding the failings of the global generalised linear model.

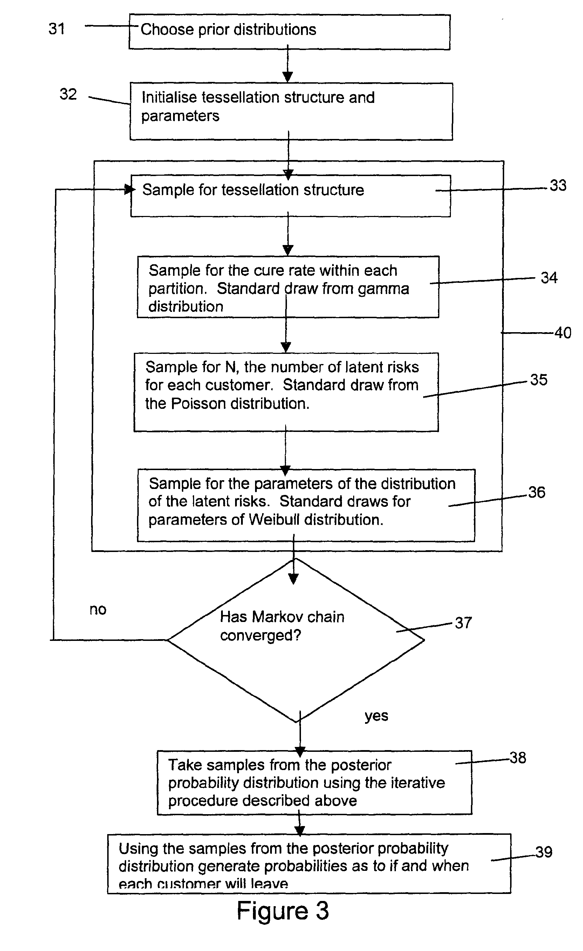

The first embodiment is now described with reference to Figure 3.

In order to create the Bayesian statistical model, first prior distributions are chosen on the basis of beliefs, experience and past data about customer attributes and behaviour (see box 31 of Figure 3). For example, the prior distributions may be specified as gamma distributions. A tessellation structure and parameters for the model are than initialised (see box 32 of Figure 3) for example, by assigning random values. The customer attributes are considered as being represented in a customer attribute space and the tessellation structure represents division of this space into partitions.

Any suitable sampling method such as a Gibbs sampling method is then used to form a posterior probability distribution from the prior distributions and customer data. This is represented by box 40 of Figure 3. This process comprises sampling for the tessellation structure (box 33 of Figure 3) and sampling for a cure rate within each partition (box 34) by making a standard draw from a gamma distribution (in the case that the prior distributions are modelled as gamma distributions). As well as this, the method comprises, for each customer, sampling for N, which is the number of latent risks (box 35). The number of latent risks is an indication of how likely a customer is to leave the bank. The greater the number of latent risks the more likely the customer is to leave. In one example, sampling for N is achieved by making a standard draw from a Poisson distribution. The next stage involves sampling for parameters of the distribution of the latent risks. In one example, this is achieved by making standard draws for the parameters of a Weibull distribution.

The sampling steps of box 40 of Figure 3 are repeated until sufficient samples are obtained to enable the posterior probability distribution to be described and "reconstructed". For example, this is done by repeating the sampling steps for a prespecified large number of iterations and assuming that sufficient samples will have been drawn (for example several thousand iterations). The results may then be compared with empirical data and the effect of further iterations assessed. Once sufficient samples have been obtained the model is said to have converged. Thus in Figure 3 a decision point 37 is shown with the test "Has Markov chain converged?". If the answer to this question is "no" and insufficient samples have been drawn the sampling method is repeated starting from box 33. If the answer to this question is "yes" then the posterior probability distribution is assumed to have been adequately described. In that case, the sampling method is repeated in order to draw samples from the reconstructed probability distribution (box 38) and these samples are used to generate probabilities as to if and when each customer will leave the bank (box 39).

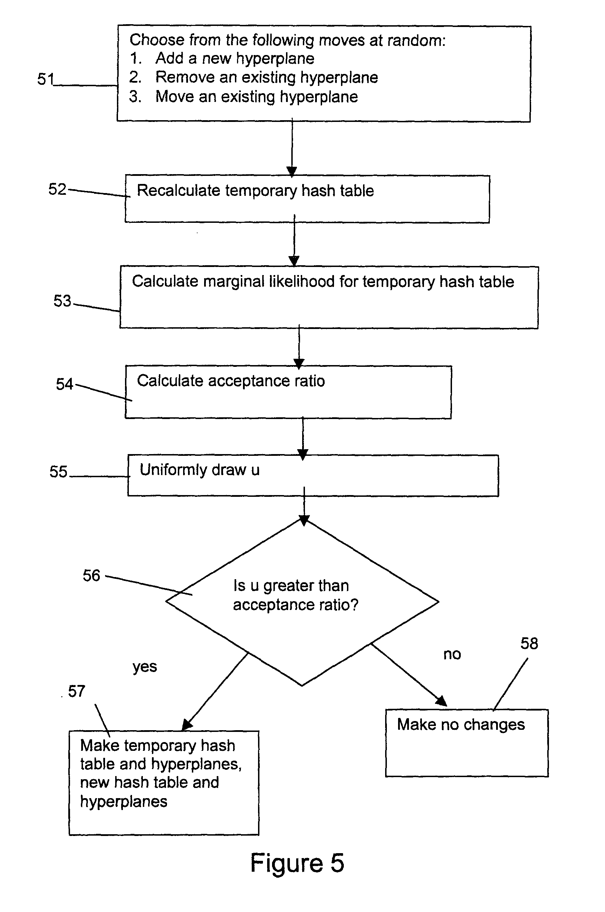

The step of sampling for the tessellation structure (box 33 of Figure 3) is shown in more detail in Figure 5. This is an iterative process which involves adjusting the tessellation structure if a parameter u is greater than a calculated acceptance ratio where u is a uniform random variable between 0 and 1. The first step involves either adding a new hyperplane, removing an existing hyperplane or moving an existing hyperplane. Once this has been done a representation of the tessellation structure is revised in order to take into account the change. For example, the tessellation structure may be represented using a temporary hash table which is recalculated to take into account the change (box 52). A marginal likelihood is then calculated (this is described in more detail below) (box 53) and an acceptance ratio also calculated (box 54). The parameter u is then uniformly drawn (box 55) using a sampling method. If u is greater than the acceptance ratio then no changes are made to the tessellation structure (box 58). However, if u is less than the acceptance ratio then the process is repeated (box 57).

The first embodiment and the way in which this extends the work of Chen, Ibrahim and Sinha is now described in more detail:

The approach described by Chen, Ibrahim and Sinha models the unknown number of cancerous cells, or more generally "risks", in a patient. If a patient has no cancerous cells the patient is said to be cured, otherwise the risk is assumed to increase with the number of cancerous cells. The number of risks, denoted by $N$, is modelled as a Poisson distribution. The time to death due to risk $i$ is denoted by $Z_i$. The model assumes that the random variables $Z_1, ..., Z_n$ are independent and identically distributed (i.i.d.) with a common distribution function $F(t) = 1 - S(t)$, where $S(t)$ is known as the survival function and represents the probability of surviving to time $t$. The overall survival function is given by the probability of surviving $N$ risks until time $t$. This is written as

$$S_p(t) = P(\text{alive at time } t)$$
$$= P(N = 0) + P(Z_1 > t, ..., Z_N > t, N \geq 1)$$
$$= \exp(-\theta) + \sum_{k=1}^{\infty} S(t)^k \frac{\theta^k}{k!} \exp(-\theta)$$
$$= \exp(-\theta + \theta S(t)) = \exp(-\theta F(t))$$

$t$ is the response of interest, for example the time between a customer closing a loan and leaving the bank. The distribution function $F(t)$ of the risks $Z$ can take any form, for example the Weibull distribution is used. However, it is not essential to use the Weibull distribution; any other suitable distribution can be used. The Weibull distribution has the

following density function

$$p(t|\alpha, \lambda) = \lambda \alpha t^{\alpha-1} \exp(-\lambda t^{\alpha})$$

Chen, Ibrahim and Sinha model the parameter of the Poisson distribution with a generalised linear model, thus

$$\theta = \exp(X'\beta),$$

a generalised linear model. A customer's attributes are denoted by $X$ and $\beta$ denotes the parameters. Thus if we have $p$ customer attributes $X_1,...,X_p$ we will have parameters $\beta_1,...,\beta_p$. This is a global model because the parameters, $\beta$, take the same value for each customer. The unknown parameters of the model are $N_1,...,N_n$, $\lambda,\gamma$ and $\beta$ where $\lambda$ and $\gamma$ are the parameters of the Weibull distribution. As with most Bayesian models, the posterior distribution of the unknown parameters cannot be expressed analytically. The Gibbs sampler is a widely used method for drawing random values from posterior distributions. The posterior distribution is reconstructed from the samples generated by the Gibbs sampler. To implement a Gibbs sampler the full conditional distributions of the parameters are required. Sampling for $\beta$ is not standard. An algorithm exists to draw from the full conditional distribution of each component of $\beta$. However the algorithm is relatively computationally expensive and $p$ draws will be required from it for each sweep of the Gibbs sampler.

Global models, such as that described by Chen, Ibrahim and Sinha are not always appropriate, particularly for a large set of customers. In that case a local model as described in the present invention has been found to be more effective. The local model of the present invention is simple and more flexible than the generalised linear model used previously. The space of customer attributes is split into disjoint sub-populations or partitions. The partitions are defined geometrically. For example, hyperplanes are used to divide the space of customer attributes. Within each subpopulation a constant response $\theta$ is fit, the most simple of local models.

The unknown parameters of the model are $N_1,...,N_n$, $\alpha$, $\lambda,$, $T$ and $\theta_1,...,\theta_m$ where $T$ denotes the tessellation structure with $m$ sub-populations or partitions. We denote the response in the partition $j$ by $\theta_j$, the number of observations in partition $j$ by $n_j$, the latent variables in partition $j$ by $N_{1j},...,N_{nj}$ and the observations in partition $j$ by $t_{1j},...,t_{nj}$. A Gibbs sampler (or any other suitable type of sampling method) is used to draw from the posterior distribution of the unknown parameters which is given by

$$p(\alpha, \lambda, N_1,...,N_n, \theta_1,...,\theta_m, T|t_1,...,t_n) \propto p(\alpha)p(\lambda)\prod_{j=1}^{m} p(\theta_j)\prod_{i=1}^{n_i} p(t_{ij}|N_{ij}, \alpha, \lambda)p(N_{ij}|\theta_j)$$

$$= p(\alpha)p(\lambda)\prod_{j=1}^{m} p(\theta_j)\exp\left\{-\lambda\sum_{i=1}^{n_i} N_i t_{ij}^{\alpha_j-1}\right\}\prod_{i=1}^{n_i}(N_i \lambda \alpha_{ij}^{\alpha-1})^{t_{ij}} \frac{\theta_j^{N_{ij}} \exp(-\theta_j)}{N_{ij}!}$$

The following prior distributions are assigned

$$p(\theta_j) = Ga(\varphi_0, \varphi_1)$$

$$p(\lambda) = Ga(\lambda_0, \lambda_1)$$

$$p(\alpha) = Ga(\alpha_0, \alpha_1)$$

which are all gamma distributions. However, it is not essential to use Gamma distributions to model the prior distributions. Any other suitable type of distribution can be used.

The Gibbs sampler (or other sampling method) draws from the following full conditional distributions

$$p(\alpha|\cdots) \propto \alpha^{n+\alpha_0-1}\left(\prod_{i=1}^{n}t_i\right)^{\alpha}\exp\left\{-\alpha\alpha_0 - \lambda\sum_{i=1}^{n}N_i t_i^{\alpha}\right\}$$

$$p(\lambda|\cdots) = Ga(\lambda_0 n + \lambda_0, \lambda_1 + \sum N_i t_i^{\alpha})$$

$$p(N_{ij}|\cdots) = Pn(\theta_j\exp(-\lambda_i^{\alpha})), \quad i = 1,\ldots,n_j, j = 1,\ldots m$$

$$p(\theta_j,T|\cdots) = p(T|\cdots)p(\theta_j|T,\cdots), \quad j = 1,\ldots m$$

where

$$p(\theta_j|T,\cdots) = Ga(\theta_0 + n_j, \theta_1 + \sum_{i=1}^{n_j}N_{ij})$$

$$p(T|\cdots) \propto p(N_1,\ldots,N_n|T)p(T)$$

$$= p(T)\prod_{j=1}^{m}p(N_{1j},\ldots,N_{n_j,j}|T)$$

Ga denotes the gamma distribution and Pn denotes the Poisson distribution. The example discussed here uses Poisson distributions to model the full conditional distributions, however, any other suitable type of distribution can be used. An advantage of choosing the Poisson distribution is that marginal likelihoods are straightforward to calculate as described below.

To fit a local model the marginal likelihood $p(N_1,\ldots,N_n)$ is required. The marginal likelihood is the likelihood of the data with the parameters θ integrated out.

The marginal likelihood is straightforward to evaluate in this model due to the nature of the Poisson distribution. If we assign θ a Gamma ($\theta_0$, $\theta_1$) prior the marginal likelihood of the number of risks of each customer $N_1,\ldots,N_n$ is given by

$$p(N_1,\ldots,N_n|\theta_0,\theta_1) = \int\prod_{i=1}^{n}p(N_i|\theta)p(\theta|\theta_0,\theta_1)d\theta$$

$$= \int\prod_{i=1}^{n}\frac{\theta^{N_i}\exp(-\theta)}{N_i!}\frac{\Gamma(\theta_0)}{\theta_1^{\theta_0}}\theta^{\theta_0-1}\exp(-\theta_1\theta)d\theta$$

$$= \frac{\theta_1^{\theta_0}}{\Gamma(\theta_0)\Pi(N_i!)}\int\theta^{\sum N_i+\theta_0-1}\exp(-\theta(n+\theta_1))d\theta$$

$$= \frac{\Gamma(\theta_0+\Sigma N_i)}{(\theta_1+n)^{\theta_0+\Sigma N_i}\Pi(N_i!)}\frac{\theta_1^{\theta_0}}{\Gamma(\theta_0)}$$

Given the marginal distribution, the tessellation structure is sampled for using a Metropolis random walk, within the Gibbs sampler (or other sampling method).

The resulting sampler is computationally more efficient than the equivalent sampler for the generalised linear model described above. Sampling for β has been replaced by sampling for the tessellation structure and the responses within each partition, both of which are straightforward.

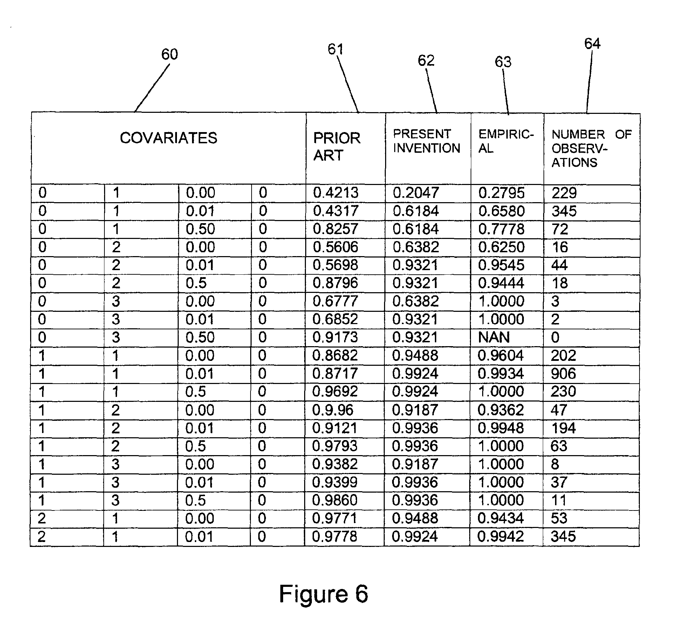

The method described above has been implemented using a computer system such as that illustrated in Figure 2. Figure 6 is a table containing example input data for the computer system of Figure 2 and example output data obtained from that computer system (using the method described immediately above) as well as corresponding empirical data. The first four columns 60 of the table in Figure 6 are headed "co-variates" and contain attribute values. Each row of the table represents data for an individual bank customer. Columns 61 to 63 contain probability values which have either been obtained from empirical data (column 63), or which have been obtained from the method of the present invention (column 62), or from the prior art method of Chen, Ibrahim and Sinha (column 61). The final column 64 of table 6 shows the number of observations that were available for each customer.

The probability values produced by the method of the present invention are closer to the empirical values than those produced by the prior art method of Chen, Ibrahim and Sinha. For example, for the first customer whose data is contained in the first row of the table, the empirical probability value is 0.2795 and the probability value predicted using the method of the present invention is 0.2047 whereas the prior art method gave 0.4213.

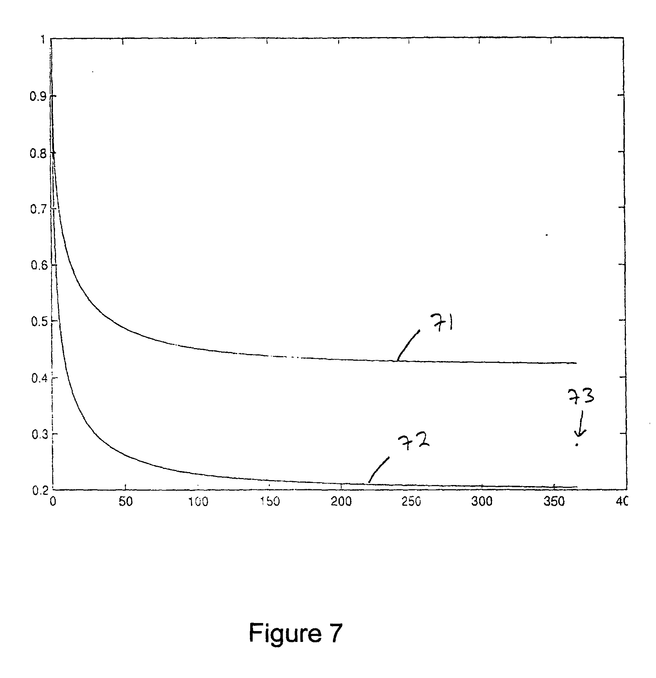

Figure 7 shows a graph formed using the data of Figure 6 together with further data for other customers. The graph is a plot of the proportion of customers who are still with the bank (or predicted to be still with the bank) against time in days. The results of the prior art Chen, Ibrahim and Sinha model are represented by the upper curve 71 and the results of the method of the present invention by the lower curve 72. A single point 73 is shown which indicates the proportion of customers still with the bank after 1 year. This data point is obtained from empirical data.

The data shown in Figures 6 and 7 which are produced from the method of the present invention are slight underestimates of the empirical data. This is because not all people who will leave the bank have actually left by the end of the experiment. This means that the actual proportion (from empirical data) of people who are still with the bank will be lower than predicted using the method of the present invention. Taking this into account, the predictions of the present invention are actually even closer to the empirical data in Figure 7.

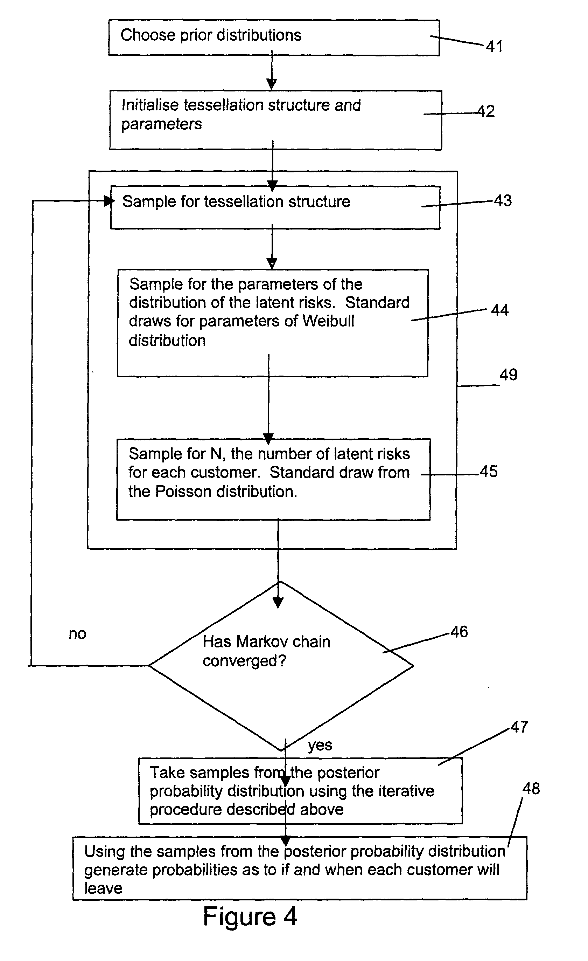

The second embodiment is now described with reference to Figure 4. As for the first embodiment, prior distributions are chosen (box 41) and the tessellation structure and parameters are initialised (box 42). Using the prior distributions and input customer data a Gibbs sampling method (or any other suitable sampling method) is then used to draw samples in order to "reconstruct" the posterior probability distribution. This involves sampling for the tessellation structure (box 43) and then sampling for the parameters of the distribution of latent risks (box 44). This comprises taking standard draws for the parameters of the Weibull distribution (box 44). The next stage (box 45) comprises for each customer, sampling for N, the number of latent risks. This is achieved by taking a standard draw from a Poisson distribution (or any other suitable distribution).

As in the first embodiment the sampling process is iterated until the posterior probability distribution has been adequately "reconstructed" (see box 46). This is achieved in any of the ways described above for the first embodiment.

Once convergence has been achieved, the posterior probability distribution is assumed to be adequately "reconstructed" and samples are then drawn from it (box 47) using the sampling method of box 49. The samples drawn from the posterior probability distribution are then used to generate probabilities as to if and when each customer will leave the bank (box 48).

The second embodiment is now described in more detail:

The second embodiment uses a local model and splits the space of customer attributes into disjoint sub-populations or partitions. The partitions are defined geometrically. For example, hyperplanes can be used to divide the space of customer attributes. Within each partition a Weibull distribution is fitted which has the following density function:

$$p(t|\alpha , \lambda) = \lambda\alpha t^{\alpha-1}\exp(-\lambda t^{\alpha})$$

In survival analysis $t$ refers to the time of death of a patient. In a banking context $t$ represents for example, the time between a customer closing a loan and leaving the bank.

The local Weibull distribution makes use of the following mixture representation of the Weibull distribution:

$$p(t|u, \alpha) = \alpha u^{-1}t^{\alpha-1}I(t^{\alpha} < u)$$

$$p(u| \lambda) = \lambda^{2}u\exp(-u \lambda)$$

as described by Walker and Gutierrez-Pera (see the section headed "references" below for bibliographic details). It is straightforward to show that this mixture yields the marginal distribution

$$p(t|\alpha, \lambda) = \lambda\alpha t^{\alpha-1}\exp(-\lambda t^{\alpha})$$

which is Weibull ($\alpha, \lambda$).

The unknown parameters of the model are $u_1,...,u_n$, $\alpha_1,..., \alpha_m$, $\lambda_1,..., \lambda_m$ and the tessellation structure $T$ with $m$ sub-populations or partitions. The parameters of the Weibull distribution in partition $j$ are denoted by $\alpha_j$, $\lambda_j$, the number of observations in partition $j$ is denoted by $n_j$ and the latent variables in partition $j$ are denoted by $u_{1j},...,u_{n_j}$, similarly we denote the observations in partition $j$ by $t_{1j},...,t_{nj}$. The posterior distribution of the unknown parameters is

$$p(\alpha_1,\ldots, \alpha_m, \lambda_1,\ldots, \lambda_n, u_1,\ldots,u_n, T|t_1,\ldots,t_n) = \prod_{j=1}^{m} p(\alpha_j)p(\lambda_j)\prod_{i=1}^{n_i} p(t_{ij}|u_{ij}, \alpha_j)p(u_{ij}|\lambda_j)$$

$$= \prod_{j=1}^{m} p(\alpha_j)p(\lambda_j)\prod_{i=1}^{n_i} \alpha\lambda t_{ij}^{\alpha-1}\exp(-u_{ij}\lambda_j)I(t_{ij}^{\alpha_j} < u_{ij})$$

We take the following prior distributions for $\alpha$ and $\lambda$

$$p(\lambda_j) = Ga(\lambda_0, \lambda_1)$$

$$p(\alpha_j) = Ga(\alpha_0, \alpha_1)$$

However, it is not essential to represent the prior distributions using Gamma distributions. Any other suitable distributions can be used.

As with most Bayesian models, the posterior distribution of the unknown parameters cannot be expressed analytically. The Gibbs sampler (or any other suitable sampling method) is therefore used to draw random values from the posterior distribution. The posterior distribution is then reconstructed from the samples generated by the Gibbs (or other) sampler. To implement the Gibbs (or other) sampler the full conditional distributions of the parameters are required. In the present embodiment we draw from the following full conditional distribution

$$p(\alpha_1,..., \alpha_m, \lambda_1,..., \lambda_m, T|t_1,..., t_n, u_1,..., u_n)$$

$$= p(\alpha_1,..., \alpha_m, \lambda_1,..., \lambda_m|T,t_1,..., t_n, u_1,...,u_n)p(T|t_1,...,t_n,u_1,...,u_n)$$

$$p(u_1,...,u_n|\alpha_1,...,\alpha_m,\lambda_1,...,\lambda_m,T,t_1,...,t_n)$$

Given a tessellation structure $\alpha_1,..., \alpha_m$, $\lambda_1,..., \lambda_m$ and $u_1,...,u_n$ are independent and their full conditional distributions are as follows;

$$p(\alpha_j|\cdots) \propto \alpha_1^{n_i+\alpha_0-1}\exp\left\{-\alpha_1\left(\alpha_1 - \sum_{i=1}^{n_i}\log t_{ij}\right)\right\}$$

$$p(\lambda_j|\cdots) = Ga\left(\lambda_1|2n_i + \lambda_0, \lambda_1 + \sum_{i=1}^{n_i}u_i\right) \quad j = 1,\ldots,m$$

$$p(u_i|\cdots) \propto \exp(-u_i\lambda_1)I(t_i^{\alpha} < \lambda_1) \quad i = 1,\ldots,n$$

The distribution of a tessellation structure is given by

$$p(T|t_1,...,t_n,u_1,...,u_n) \propto p(t_1,...,t_n|u_1,...,u_n,T)p(u_1,...,u_n|T)p(T)$$

Thus we require the marginal distribution

$$p(t_1,...,t_n,u_1,...,u_n) = p(t_1,...,t_n|u_1,...,u_n)p(u_1,...,u_n)$$

The first term on the right hand side is given by

$$p(t_1,\ldots,t_n|u_1,\ldots,u_n) = \int_a^b \prod_{i=1}^n p(t_i|u_i, \alpha)p(\alpha)d\alpha$$

$$= \left(\prod_{i=1}^n u_i t_i\right)\int_a^b \alpha^{n+\alpha_0-1}\exp\left(\alpha\left(\sum_{i=1}^n \log t_i - \alpha_1\right)\right)d\alpha$$

If $m = n + \alpha_0 - 1$ is an integer this integral can be evaluated by parts as follows

$$I_m = \int_a^b x^m \exp(xs)dx$$

$$= \left[x^m \frac{\exp(xs)}{s}\right]_a^b - \frac{m}{s}I_{m-1}$$

$$= \frac{1}{s}\sum_{i=0}^m \left[x^{n-i}\left(-\frac{n}{s}\right)^i \exp(xs)\right]_a^b$$

The marginal distribution of the latent variables is given by

$$p(u_1,\ldots,u_n) = \int_a^b \prod_{i=1}^n p(u_i|\lambda)p(\lambda)d\lambda$$

$$= \frac{\lambda_1^{\lambda_0}\prod_{i=1}^n u_{1i}}{\Gamma(\lambda_0)}\int_a^b \lambda^{n+\lambda_0-1}\exp\left\{-\lambda\left(\lambda_1 + \sum_{i=1}^n u_i\right)\right\}d\lambda$$

$$= \prod_{i=1}^n u_{1i}\frac{\lambda_1^{\lambda_0}\Gamma(2n+\lambda_0)}{\Gamma(\lambda_0)\left(\lambda_1 + \sum_{i=1}^n u_i\right)^{2n+\lambda_0}}$$

Given the marginal distribution $p(t_1,...,t_n,u_1,...,u_n) = p(t_1,...,t_n|u_1,...,u_n)p(u_1,...,u_n)$ the tessellation structure is sampled for using a Metropolis random walk within the Gibbs (or other) sampler.

A range of applications are within the scope of the invention. These include situations in which it is required to predict whether a specified event will occur for an entity after a specified trigger event has occurred for that entity. For example, to if and when a customer will leave a bank after that customer has closed a loan with the bank. Other examples include predicting the lifetime of a patient after that patient has contracted a particular disease.

**References**

Stephen G Walker and Eduardo Guiterrez-Pera "Robustifying Bayesian Procedures" University of Valencia, Sixth Valencia International meeting on Bayesian Statistics, Invited papers, May 30 to June 4 1998.
Chen, Ibrahim and Sinha "A new Bayesian Model For Survival Data With a Surviving Fraction" Journal of the American Statistical Association, 1999

**Claims**

1. A method of predicting whether a specified event will occur for an entity after a specified trigger event has occurred for that entity, comprising the steps of:-

   (i) accessing data about other entities for which the specified event has occurred in the past after the specified trigger event;
   (ii) accessing data about the entity for which the prediction is required;
   (iii) creating a Bayesian statistical model on the basis of at least the accessed data; and
   (iv) using the model to generate the prediction; wherein the data comprises a plurality of attributes associated with each entity and wherein creating the model comprises partitioning the attributes into a plurality of partitions.

2. A method as claimed in claim 1 which further comprises predicting when the specified event will occur.

3. A method as claimed in claim 1 or claim 2 wherein the entities are customers.

4. A method as claimed in any preceding claim wherein the specified event is leaving a bank.

5. A method as claimed in any preceding claim wherein the specified trigger event is closing a loan.

6. A method as claimed in any preceding claim wherein said model comprises a survival analysis type model.

7. A method as claimed in claim 6 wherein said survival analysis type model is arranged to take into account the assumption that the specified event will not occur for some of the entities.

8. A method as claimed in any preceding claim wherein the step of creating the model further comprises calculating the marginal likelihood of latent risks within each partition.

9. A method as claimed in any preceding claim wherein the step of creating the model further comprises mixing over all possible partitions in a Bayesian framework.

10. A method as claimed in any of claims 1 to 8 wherein the step of creating the model further comprises choosing an optimal set of partitions which best predicts latent risks within each partition.

11. A method as claimed in claim 9 wherein the step of mixing over all possible partitions comprises using a sampling method.

12. A method as claimed in any of claims 1 to 5 wherein said step of creating the model comprises fitting a Weibull distribution to the data within each partition.

13. A method as claimed in claim 12 wherein said step of creating the model comprises calculating the marginal likelihood of the data.

14. A method as claimed in claim 13 wherein said step of creating the model further comprises mixing over all possible partitions in a Bayesian framework.

15. A method as claimed in claim 13 wherein said step of creating the model further comprises choosing an optimal set of partitions which best predicts the data.

16. A method as claimed in claim 14 wherein said step of mixing over all possible partitions comprises using a sampling method.

17. A computer system for predicting whether a specified event will occur for an entity after a specified trigger event has occurred for that entity, comprising:-

   (i) an input arranged to access data about other entities for which the specified event has occurred in the past after the specified trigger event; and wherein said input is further arranged to access data about the entity for which the prediction is required; wherein the data comprises a plurality of attributes associated with each entity;

(ii) a processor arranged to create a Bayesian statistical model on the basis of at least the accessed data by partitioning the attributes into a plurality of partitions; and wherein the processor is further arranged to use the model to generate the prediction.

**18.** A computer program arranged to control a computer system in order to predict whether a specified event will occur for an entity after a specified trigger event has occurred for that entity, said computer program being arranged to control said computer system such that:-

(i) data is accessed about other entities for which the specified event has occurred in the past after the specified trigger event;
(ii) data is accessed about the entity for which the prediction is required, wherein the data comprises a plurality of attributes associated with each entity;
(iii) a Bayesian statistical model is created on the basis of at least the accessed data by partitioning the attributes into a plurality of partitions; and
(iv) the model is used to generate the prediction.

**19.** A computer program as claimed in claim 18 which is stored on a computer readable medium.

10 — Access data about entities for which a specified event has occurred in the past after a specified trigger event

11 — Access data about an entity for which it is required to predict if a specified event will occur after a specified trigger event has occurred

12 — Create a Bayesian statistical model on the basis of at least the accessed data

13 — Use the model to generate the prediction and wherein the data comprises a plurality of attributes associated with each entity and wherein creating the model comprises partitioning the attributes

## Figure 1

Data about entities for which a specified event has occurred in the past after a specified trigger event  — 21

25 —

processor — 23

Data about an entity (or entities) for which it is required to predict if a specified event will occur after a specified trigger event has occurred  — 22

Predictions about if and/or when the specified event will occur after the specified trigger event for one or more entities — 24

## Figure 2

31 —— Choose prior distributions

32 —— Initialise tessellation structure and parameters

Sample for tessellation structure — 33

Sample for the cure rate within each partition. Standard draw from gamma distribution — 34

— 40

Sample for N, the number of latent risks for each customer. Standard draw from the Poisson distribution. — 35

Sample for the parameters of the distribution of the latent risks. Standard draws for parameters of Weibull distribution. — 36

no

Has Markov chain converged? — 37

yes

Take samples from the posterior probability distribution using the iterative procedure described above — 38

Using the samples from the posterior probability distribution generate probabilities as to if and when each customer will leave — 39

Figure 3

Choose prior distributions — 41

Initialise tessellation structure and parameters — 42

Sample for tessellation structure — 43

Sample for the parameters of the distribution of the latent risks. Standard draws for parameters of Weibull distribution — 44

— 49

Sample for N, the number of latent risks for each customer. Standard draw from the Poisson distribution. — 45

no

Has Markov chain converged? — 46

yes

— 47

Take samples from the posterior probability distribution using the iterative procedure described above

— 48

Using the samples from the posterior probability distribution generate probabilities as to if and when each customer will leave

Figure 4

Choose from the following moves at random:
1. Add a new hyperplane
51 — 2. Remove an existing hyperplane
3. Move an existing hyperplane

52 — Recalculate temporary hash table

53 — Calculate marginal likelihood for temporary hash table

54 — Calculate acceptance ratio

55 — Uniformly draw u

56 — Is u greater than acceptance ratio?

yes

no   58

.57

Make temporary hash table and hyperplanes, new hash table and hyperplanes

Make no changes

# Figure 5

| COVARIATES | | | | PRIOR ART | PRESENT INVENTION | EMPIRIC-AL | NUMBER OF OBSERV-ATIONS |
|---|---|---|---|---|---|---|---|
| 0 | 1 | 0.00 | 0 | 0.4213 | 0.2047 | 0.2795 | 229 |
| 0 | 1 | 0.01 | 0 | 0.4317 | 0.6184 | 0.6580 | 345 |
| 0 | 1 | 0.50 | 0 | 0.8257 | 0.6184 | 0.7778 | 72 |
| 0 | 2 | 0.00 | 0 | 0.5606 | 0.6382 | 0.6250 | 16 |
| 0 | 2 | 0.01 | 0 | 0.5698 | 0.9321 | 0.9545 | 44 |
| 0 | 2 | 0.5 | 0 | 0.8796 | 0.9321 | 0.9444 | 18 |
| 0 | 3 | 0.00 | 0 | 0.6777 | 0.6382 | 1.0000 | 3 |
| 0 | 3 | 0.01 | 0 | 0.6852 | 0.9321 | 1.0000 | 2 |
| 0 | 3 | 0.50 | 0 | 0.9173 | 0.9321 | NAN | 0 |
| 1 | 1 | 0.00 | 0 | 0.8682 | 0.9488 | 0.9604 | 202 |
| 1 | 1 | 0.01 | 0 | 0.8717 | 0.9924 | 0.9934 | 906 |
| 1 | 1 | 0.5 | 0 | 0.9692 | 0.9924 | 1.0000 | 230 |
| 1 | 2 | 0.00 | 0 | 0.9.96 | 0.9187 | 0.9362 | 47 |
| 1 | 2 | 0.01 | 0 | 0.9121 | 0.9936 | 0.9948 | 194 |
| 1 | 2 | 0.5 | 0 | 0.9793 | 0.9936 | 1.0000 | 63 |
| 1 | 3 | 0.00 | 0 | 0.9382 | 0.9187 | 1.0000 | 8 |
| 1 | 3 | 0.01 | 0 | 0.9399 | 0.9936 | 1.0000 | 37 |
| 1 | 3 | 0.5 | 0 | 0.9860 | 0.9936 | 1.0000 | 11 |
| 2 | 1 | 0.00 | 0 | 0.9771 | 0.9488 | 0.9434 | 53 |
| 2 | 1 | 0.01 | 0 | 0.9778 | 0.9924 | 0.9942 | 345 |

Figure 6

Figure 7

**European Patent Office**

## DECLARATION

which under Rule 45 of the European Patent Convention shall be considered, for the purposes of subsequent proceedings, as the European search report

**Application Number**

EP 01 30 2913

| The Search Division considers that the present application, does not comply with the provisions of the EPC to such an extent that it is not possible to carry out a meaningful search into the state of the art on the basis of all claims | **CLASSIFICATION OF THE APPLICATION (Int.Cl.7)** |
|---|---|
| Reason: | G06F17/60 |

The subject-matter claimed in claims 1-16 falls under the provisions of Article 52(2) and (3) EPC, such subject-matter relating to a method of doing business as such.

Claims 17-19 relate to a conventional computer system and program for performing the business method of claims 1-16. Although these claims do not literally belong to the method category, they essentially claim protection for the same commercial effect as the method claims. The Search Division considers that searching this subject-matter would serve no useful purpose. It is not at present apparent how the subject-matter of the present claims may be considered defensible in any subsequent examination phase in front of the EPO with regard to the provisions of Articles 54 and 56 EPC (novelty, inventive step); see also Guidelines B-VII, 1-6.

The applicant's attention is drawn to the fact that a search may be carried out during examination following a declaration of no search under Rule 45 EPC, should the problems which led to the declaration being issued be overcome (see EPC Guideline C-VI, 8.5).

---
-----

| Place of search | Date | Examiner |
|---|---|---|
| THE HAGUE | 13 July 2001 | Pedersen, N |

EPO FORM 1504 (P04C37)